# FASCICULE DE BREVET EUROPEEN

(11) **EP 2 261 118 B1**
(45) Date de publication et mention de la délivrance du brevet: **14.08.2013**
(21) Numéro de dépôt: 10165012.5
(22) Date de dépôt: 04.06.2010
(51) Int. Cl.: B64C 25/42

(54) **Système de freinage pour aéronef équipé de freins électromécaniques.**
Bremssystem für ein Luftfahrzeug, das mit elektromechanischen Bremsen ausgestattet ist
Braking system for an aircraft provided with electromechanical brakes.

(30) Priorité: 09.06.2009 FR 0902779
(43) Date de publication de la demande: 15.12.2010
(73) Titulaire: Messier-Bugatti-Dowty, 78140 Velizy Villacoublay (FR)
(72) Inventeur: Colin, Emmanuel, 75014, PARIS (FR); Thibault, Julien, 91190, GIF-SUR-YVETTE (FR); Girod, Pierre, 92210, SAINT-CLOUD (FR)
(74) Mandataire: Parzy, Benjamin Alain

(56) Documents cités:
- EP-A- 1 886 887
- US-A1- 2001 045 771
- US-A1- 2004 238 299

## Description

L'invention est relative à un système de freinage pour aéronef équipé de freins électromécaniques.

### ARRIERE-PLAN TECHNOLOGIQUE DE L'INVENTION

Dans les systèmes connus, les actionneurs électromécaniques de freinage sont installés au niveau des roues de l'aéronef, et reçoivent leur puissance de contrôleurs généralement installés en soute à proximité des atterrisseurs portant les roues. Les contrôleurs reçoivent des ordres d'un ou de plusieurs calculateurs de freinage installés en baie avionique, qui se trouve généralement vers l'avant de l'aéronef, à proximité de la cabine de pilotage.

La disposition des contrôleurs et des calculateurs de freinage dans les soutes permet de placer ces éléments dans un environnement favorable, moins exposé, contribuant ainsi à augmenter leur fiabilité. Cependant, cette disposition nécessite le recours à des câbles d'une longueur importante, notamment les câbles regroupés dans un harnais s'étendant entre les actionneurs et les contrôleurs et courant le long des atterrisseurs. Ces câbles représentent une masse non négligeable.

Un système de l'état de la technique est connu du document EP 1 886 887 A1.

### OBJET DE L'INVENTION

L'invention a pour objet de proposer un nouveau système de freinage à actionneurs électromécaniques, permettant de garder une fiabilité acceptable, tout en diminuant la masse de l'ensemble.

### BREVE DESCRIPTION DE L'INVENTION

En vue de la réalisation de ce but, on propose un système de freinage pour aéronef équipés de freins électromécaniques, comportant au moins un boîtier de proximité disposé à proximité des freins en bas d'atterrisseur et comportant des moyens d'entrée/sortie pour collecter et calibrer au moins des signaux en provenance de capteurs associés aux freins, le boîtier de proximité comportant en outre des moyens de gestion d'organes de blocage des actionneurs en position, le concentrateur de données étant relié à des organes de contrôle du frein disposés dans l'aéronef au moyen d'un bus de communication.

En effet, parmi les câbles descendant le long des atterrisseurs, certains sont des câbles de basse tension destinés à transmettre des signaux en provenance des capteurs (deux câbles par capteur), D'autres servent à alimenter des organes ne nécessitant qu'une faible puissance, comme les organes de blocage des actionneurs servant à bloquer les poussoirs en position pour assurer le freinage de parc.

L'invention propose donc de diminuer la longueur de ces câbles en en limitant leur extension dans une zone basse de l'atterrisseur, depuis les capteurs et les organes de blocage jusqu'au boîtier de proximité, celui-ci étant connecté au reste du système par un bus de communication courant le long de l'atterrisseur, nettement moins lourd que la multitude de câbles de faibles de puissance qu'il remplace.

La zone d'implantation du boîtier de proximité est certes plus exposée que les soutes d'atterrisseurs, ou la soute d'avionique, cependant, les fonctions implantées dans le boîtier de proximité sont des fonctions de bas niveau telle que la calibration des signaux et la gestion de la fonction de parc, qui peuvent être assurées par des logiques élémentaires, le cas échéant réalisées de façon matérielle, de sorte que celles-ci peuvent être assurées sans compromettre la fiabilité du système.

Ainsi, les dispositions de l'invention permettent donc un gain substantiel de masse, sans impacter la fiabilité du système de freinage.

### BREVE DESCRIPTION DES FIGURES

L'invention sera mieux comprise à la lumière de la description qui suit d'un mode de réalisation particulier de l'invention en référence aux figures annexées parmi lesquelles :
- la figure 1 est une vue schématique d'un atterrisseur d'aéronef portant des roues freinées par des freins électriques, et illustrant l'implantation générale du système de freinage de l'invention ;
- la figure 2 est une vue schématique d'une connexion entre un boîtier de proximité et l'un des actionneurs électromécaniques.

### DESCRIPTION DETAILLEE DE L'INVENTION

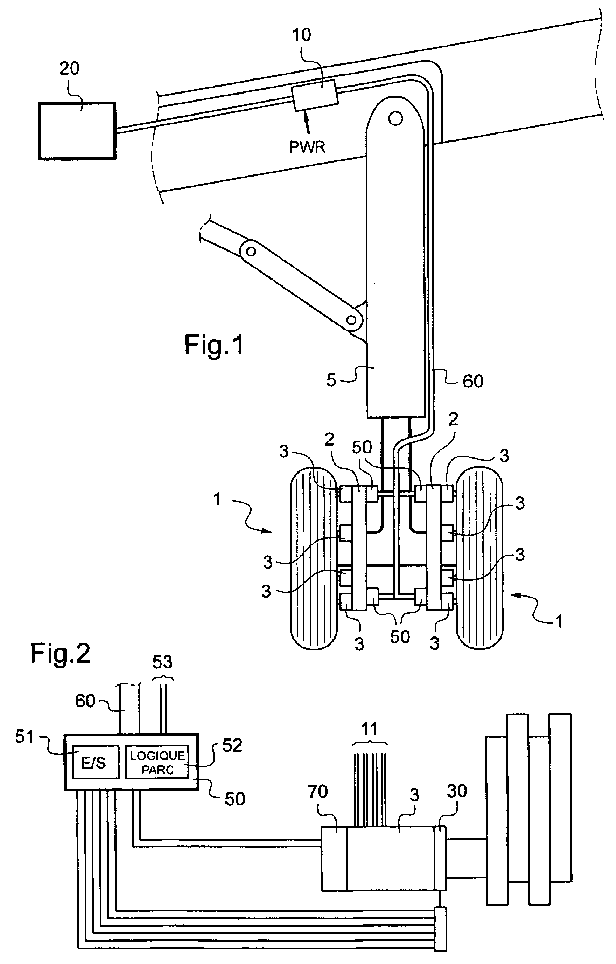

Sur la figure 1 est représentée un système de freinage selon un premier mode de réalisation de l'invention, comportant un certain nombre de roues freinées 1 équipées de freins 2 à actionneurs électromécaniques 3. Les roues sont portées en bas d'un atterrisseur 5.

Les actionneurs électromécaniques sont ici équipés de moteurs électriques pour déplacer sélectivement un poussoir en vue d'appliquer un effort de freinage sur des disques. Les moteurs sont alimentés par un ou plusieurs contrôleurs 10 (ou EMAC pour electromechanical actuator controller), comportant essentiellement un onduleur chargé de calibrer une puissance électrique en réponse à des consignes de freinage générées par un calculateur de freinage 20. A cet effet, les contrôleurs 10 sont reliés à des réseaux de haute puissance et délivrent cette puissance aux actionneurs 3 au moyen de câbles de haute puissance descendant le long des atterrisseurs. Les contrôleurs 10 sont reliés à chacun des actionneurs 3 au moyen de trois câbles d'alimentation des phases du moteur, qui portent ensemble la référence 11 sur la figure 2. Les câbles de transport de cette haute puissance ne sont pas illustrés sur la figure 1, pour plus de clarté.

Les contrôleurs 10sont disposés ici dans la soute de l'atterrisseur 5 (c'est-à-dire la soute dans laquelle il est rétracté en vol), tandis que le calculateur de freinage 20 est disposé dans la soute avionique de l'aéronef. Le calculateur de freinage 20 est relié aux contrôleurs 10 par le bus de communication de l'aéronef.

Il existe par ailleurs d'autres éléments sur le frein ou la roue qui doivent être reliés au contrôleur 10. Il s'agit essentiellement des divers capteurs nécessaires au fonctionnement des actionneurs. On peut citer notamment les resolvers 30 équipant chacun des actionneurs pour mesurer la position angulaire du moteur de l'actionneur, qui peuvent nécessiter chacun, comme illustré à la figure 2, jusqu'à six câbles.

Dans les systèmes connus, chacun de ces capteurs est normalement relié aux contrôleurs 10 au moyen de câbles basse tension, à raison d'au moins deux câbles par capteur, et courant bien sûr le long des atterrisseurs.

Il est proposé selon l'invention de disposer au moins un boîtier de proximité 50 à proximité des freins, dans la partie basse de l'atterrisseur, le boîtier de proximité étant pourvu de moyens d'entrée sortie 51 pour collecter les signaux des différents capteurs précités les mettre en forme et les convertir en signaux numériques adaptés à être envoyés sur un bus de communication 60 s'étendant entre le boîtier de proximité 50 et le contrôleur 10 en soute.

Le bus de communication 60 sera de préférence choisi pour être particulièrement robuste, puisqu'il s'étend dans un environnement exposé le long de l'atterrisseur.

Ainsi, les câbles basse tension s'étendent maintenant uniquement entre les capteurs et le boîtier de proximité 50 localisé au voisinage immédiat des capteurs, ce qui en diminue considérablement la longueur. Le long de l'atterrisseur ne s'étend plus maintenant qu'un seul bus de communication, ne nécessitant en pratique que deux câbles.

D'autres éléments doivent également être reliés au contrôleur 10. Il s'agit des organes de blocage 70 équipant chacun des actionneurs pour bloquer le poussoir en position, pour notamment assurer la fonction de freinage de parc. Chacun des organes de parc est normalement relié au contrôleur 10 correspondant par deux câbles basse tension par lesquels transitent la puissance nécessaire à l'actionnement de l'organe de blocage.

Selon l'invention, le boîtier de proximité 50 est équipé d'une logique de commande 52 des organes de parc qui sont reliés au boîtier. On remarquera que la logique de commande des organes est très simple et consiste à envoyer une impulsion à l'organe de blocage 70 si celui-ci est de type bistable, ou à couper l'alimentation si l'organe de blocage 70 est du type à manque de courant, en réponse à un ordre d'actionnement. Une telle logique peut être réalisée de façon matérielle, ou mise en oeuvre de façon logicielle au moyen d'un microcontrôleur basique, donc par des moyens très simples adaptés à fonctionner de façon fiable dans un environnement a priori moins favorable qu'en soute.

L'ordre d'actionnement de l'organe de blocage 70 sera de préférence transmis depuis le contrôleur 10 au moyen du bus de communication 60, de sorte que l'on supprime, au moins sur le trajet allant du contrôleur au boîtier de proximité, un nombre conséquent de câbles basse tension.

Ainsi, l'implantation de la logique de commande 52 des organes de commande directement dans le boîtier de proximité 50 permet de supprimer encore un certain nombre de câbles basse tension.

Pour être complet, il convient de mentionner que le boîtier de proximité 50 lui-même doit être alimenté en basse tension, ce qui est assuré au moyen de deux câbles basse tension 53 descendant le long de l'atterrisseur.

Le nombre de boîtiers de proximité 50 pourra varier selon les circonstances. Pour un frein à quatre actionneurs, on prévoira de préférence deux boîtiers de proximité, chacun d'entre eux étant relié aux capteurs et aux organes de blocage de deux des actionneurs. Les boîtiers de proximité 50 seront alors avantageusement disposés directement sur le frein correspondant, comme illustré à la figure 1, pour minimiser la longueur des câbles s'étendant depuis les capteurs et les organes de blocage vers les boîtiers.

Dans cette disposition, il est facile de quantifier le gain apporté par les dispositions de l'invention. En supposant que chaque frein comporte quatre actionneurs, il faut, dans les systèmes connus, compter huit câbles par actionneur (six pour le resolver, deux pour l'organe de blocage), soit trente deux câbles basse tension qui courent le long de l'atterrisseur pour chacun des freins.

Avec les dispositions de l'invention, on ne compte plus qu'un bus de communication (deux câbles) et l'alimentation des boîtiers de proximité, soit quatre câbles. On arrive donc à un total de six câbles basse tension par frein, ce qui constitue un gain important.

Il conviendra d'assurer l'alimentation des dispositifs de parc. Cette alimentation peut être assurée soit par une alimentation dédiée arrivant sur le boîtier de proximité correspondant (deux fils supplémentaires par boîtier), soit en profitant de l'alimentation qui sert à alimenter les cartes électroniques contenues dans le boîtier de proximité.

Il va de soi que le nombre de câbles haute tension assurant l'alimentation des moteurs des actionneurs n'est pas modifié par les dispositions de l'invention.

A cet égard, il est intéressant d'utiliser les boîtiers de proximité 50 comme boîte de jonction qui reçoit l'alimentation haute tension pour la distribuer aux moteurs des actionneurs. Dans cette configuration, chaque actionneur est relié électriquement à un unique boîtier de proximité, ce qui facilite son démontage et son remplacement éventuel.

L'invention n'est pas limitée à ce qui vient d'être décrit, mais englobe au contraire toute variante entrant dans le cadre défini par les revendications. En particulier, on pourra relier aux boîtiers de proximité d'autres capteurs que ceux directement rattachés aux freins ou aux actionneurs, En particulier, on pourra connecter à l'un ou à l'autre des boîtiers de proximité les tachymètres mesurant la vitesse de rotation de chacune des roues, mais également des capteurs de proximité ou de position nécessaires à la manoeuvre d'extension/rétraction des atterrisseurs.

En variante, si l'on veut assurer une ségrégation poussée, l'ordre à destination des organes de blocage pourra être transmis au moyen de deux câbles séparés du bus de communication. Cependant, cet ordre pourra être communalisé pour tous les actionneurs reliés au boîtier de proximité, de sorte que ces deux seuls câbles suffisent pour commander tous les organes de blocage concernés.

Quant au nombre de boîtiers de proximité et la façon dont ils sont associés aux actionneurs, on pourra bien sûr envisager toutes sortes de variantes. En particulier, un boîtier de proximité pourra être associé à des actionneurs appartenant à des freins distincts, afin d'assurer un croisement garantissant que la défaillance d'un boîtier ne conduit pas à la perte d'un nombre important d'actionneurs sur un frein donné.

## Revendications

1. Système de freinage pour aéronef équipés de freins électromécaniques comportant au moins un actionneur électromécanique (3), et au moins un boîtier de proximité (50) disposé à proximité des freins en bas d'atterrisseur et comportant des moyens d'entrée/sortie (51) pour collecter et calibrer au moins des signaux en provenance de capteurs (30) associés aux freins, et transmettre les signaux ainsi traités à des organes de contrôle (10) des actionneurs au moyen d'un bus de communication (60) courant le long de l'atterrisseur, **caractérisée en ce que** le boîtier de proximité comporte en outre des moyens de gestion (52) d'organes de blocage (70) des actionneurs.

2. Système de freinage selon la revendication 1, dans lequel chaque frein comporte quatre actionneurs (3), deux boîtiers de proximité (50) étant portés par chacun des freins pour être reliés chacun à deux actionneurs du frein.

## Patentansprüche

1. Bremssystem für ein Luftfahrzeug, das mit elektromechanischen Bremsen ausgestattet ist, umfassend mindestens ein elektromechanisches Betätigungsglied (3) und mindestens ein Nachbargehäuse (50), das in der Nähe der Bremsen unten am Fahrgestell angeordnet ist und Eingabemittel/Ausgabemittel (51) umfasst, um mindestens die von den mit den Bremsen verbundenen Sensoren (30) ausgehenden Signale zu erfassen und zu kalibrieren und die so verarbeiteten Signale mit Hilfe eines Kommunikationsbusses (60), der entlang des Fahrgestells läuft, an Steuerorgane (10) der Stellglieder zu übertragen, **dadurch gekennzeichnet, dass** das benachbarte Gehäuse des Weiteren Steuermittel (52) zum Steuern der Sperrorgane (70) der Stellglieder umfasst.

2. Bremssystem nach Anspruch 1, bei dem jede Bremse vier Betätigungsglieder (3) umfasst, wobei zwei benachbarte Gehäuse (50) von den jeweiligen Bremsen getragen werden, damit sie jeweils mit zwei Betätigungsglieclern verbunden sind.

## Claims

1. A braking system architecture for an aircraft fitted with electromechanical brakes including at least one electromechanical actuator (3), the architecture being **characterized in that** it comprises at least one proximity unit (50) disposed in the proximity of the brakes at the bottom of the undercarriage and including input/output means (51) for collecting and calibrating at least signals coming from sensors (30) associated with the brakes, and for transmitting the signals as processed in this way to control members (10) for controlling the actuators by means of a communications bus (60) running along the undercarriage, the proximity unit further including control means (52) for controlling the blocking members (70) of the actuators.

2. A braking system architecture according to claim 1, wherein each brake has four actuators (3), two proximity units (50) being carried by each of the brakes so that each of them is connected to two of the actuators of the brake.
